(19) Europäisches Patentamt
European Patent Office
Office européen des brevets

(11) **EP 4 207 051 B1**

(12) **EUROPEAN PATENT SPECIFICATION**

(45) Date of publication and mention
of the grant of the patent:
**25.02.2026 Bulletin 2026/09**

(21) Application number: **21868690.5**

(22) Date of filing: **17.09.2021**

(51) International Patent Classification (IPC):
**G06T 3/4053** (2024.01)    **G06N 3/04** (2023.01)
**G06N 3/09** (2023.01)    **G06N 3/0464** (2023.01)

(52) Cooperative Patent Classification (CPC):
**G06T 3/4053; G06N 3/04; G06N 3/0464; G06N 3/09**

(86) International application number:
**PCT/CN2021/118901**

(87) International publication number:
**WO 2022/057868 (24.03.2022 Gazette 2022/12)**

(54) **IMAGE SUPER-RESOLUTION METHOD AND ELECTRONIC DEVICE**

BILDHOCHAUFLÖSUNGSVERFAHREN UND ELEKTRONISCHE VORRICHTUNG

PROCÉDÉ DE SUPER-RÉSOLUTION D'IMAGE ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.09.2020 CN 202010997488**

(43) Date of publication of application:
**05.07.2023 Bulletin 2023/27**

(73) Proprietor: **Huawei Technologies Co., Ltd.
Shenzhen, Guangdong 518129 (CN)**

(72) Inventors:
• **ZHANG, Lu**
**Shenzhen, Guangdong 518129 (CN)**
• **LIN, Huan**
**Shenzhen, Guangdong 518129 (CN)**
• **HU, Kangkang**
**Shenzhen, Guangdong 518129 (CN)**

(74) Representative: **Gill Jennings & Every LLP
The Broadgate Tower
20 Primrose Street
London EC2A 2ES (GB)**

(56) References cited:
**WO-A1-2019/192588    CN-A- 108 062 744
CN-A- 108 765 279    CN-A- 109 685 717
CN-A- 109 903 221    US-A1- 2019 378 242
US-A1- 2021 004 935**

• **JINGYU YANG ET AL: "Implicit Transformer
Network for Screen Content Image Continuous
Super-Resolution", ARXIV.ORG, CORNELL
UNIVERSITY LIBRARY, 201 OLIN LIBRARY
CORNELL UNIVERSITY ITHACA, NY 14853, 12
December 2021 (2021-12-12), XP091116013**

EP 4 207 051 B1

Description

TECHNICAL FIELD

This application relates to the field of image processing technologies, and in particular, to an image super-resolution method and an electronic device.

BACKGROUND

With the development of electronic imaging technologies, a screen resolution is constantly increased. Even a resolution of a mobile phone screen of several inches has reached 1080×1920 (pixel × pixel), and resolutions of a television screen and a computer screen of larger physical sizes have reached resolutions of up to 4K or even 8K. An increased screen resolution provides larger display space of an image and a video. However, an image resource such as an original video and image cannot perfectly adapt to a screen resolution. Due to a limitation on a network bandwidth during video playing and a video call, a device receives an original image with a low resolution.

Image super-resolution (super resolution, SR) is a process of restoring a high-resolution (high resolution, HR) image or image sequence from a low-resolution (low resolution, LR) image or image sequence. A learning-based SR method is a hot topic in recent years, and a basic idea of the learning-based SR method is to determine, through calculation, a mapping relationship between an LR image and an HR image in a given training image set based on the training set. Because a deep convolution model has a capability of obtaining high-level abstract information of an image, the mapping relationship is usually implemented by using the deep convolution model.

In most of existing upsampling manners used for a non-integer multiple super-resolution network, an idea of a conventional interpolation algorithm is still used, including three steps: obtaining a neighborhood, calculating a weight based on pixel position offset information, and performing weighted averaging. Consequently, in a rendering process, an image quality loss caused by an interpolation operation, for example, an image is jagged or blurred, cannot be avoided.

WO 2019/192588 A1 describes an image super resolution method and device. The method comprises: receiving a low resolution image (S101); performing pre-processing on the low resolution image, to obtain a vertical gradient map, a horizontal gradient map, and a luminance map (S102); taking the vertical gradient map, the horizontal gradient map and the luminance map as information concerning three different dimensions respectively to form a feature map to be inputted (S103); performing size conversion on said feature map to obtain an input feature map (S104); performing non-linear transformation processing on the input feature map to obtain a non-linear transformed input feature map, and performing weighting processing on the input feature map and the non-linear transformed input feature map, to obtain an output feature map (S105); performing size conversion on the output feature map to obtain a residual map (S106); and combining the low resolution image and the residual map to obtain a high resolution image (S107).

Jingyu Yang et al: "implicit Transformer Network for Screen Content Image Continuous Super-Resolution" describes an implicit transformer super-resolution network, ITSRN, for screen-content images super-resolution.

SUMMARY

The present invention is defined by the features disclosed in the independent claims. Additional embodiments are defined in the dependent claims. Embodiments of this application provide an image super-resolution method, to convert a low-resolution image into a high-resolution image for display. In this method, pixel position offset information and a texture feature are fused in a weight matrix. Therefore, an image quality loss caused when interpolation processing is performed by relying on only the pixel position offset information can be avoided, and image quality of a high-resolution image can be improved.

A first aspect of embodiments of this application provides an image super-resolution method, including: A terminal obtains pixel position offset information based on an image with a first resolution, and a target resolution, where the target resolution is greater than the first resolution; the terminal performs feature extraction on the image with the first resolution to obtain a feature map including a texture feature; the terminal performs information fusion on the pixel position offset information and the feature map to obtain a target weight matrix; and the terminal obtains an image with the target resolution based on the target weight matrix.

According to the method in embodiments of this application, the terminal may obtain an image with an original resolution of an application, where the original resolution is referred to as a first resolution in this embodiment; and may further obtain a target resolution for display of the image, and may obtain pixel position offset information based on the image with the first resolution, and the target resolution. In addition, the terminal further extracts a texture feature of the image with the first resolution, and obtains a target weight matrix through fusion of the pixel position offset information and the texture feature. The target weight matrix is used to provide a sampling weight of each pixel in an upsampling operation in the super-resolution method. The pixel position offset information and the texture feature are fused in the target weight matrix in this solution, and a high-resolution image is obtained based on the target weight matrix. Therefore, an image quality loss that is similar to that caused by a conventional interpolation operation and that is caused when a weight matrix is obtained based on only the pixel position offset information can be avoided. Therefore, image quality of the high-resolution image can be improved.

In a possible implementation of the first aspect, the pixel position offset information includes an offset matrix and a magnification scale, the offset matrix indicates a sampling offset of each pixel in the image with the first resolution, and the magnification scale is a ratio of the target resolution to the first resolution.

According to the method in embodiments of this application, the pixel position offset information specifically includes the offset matrix and the magnification scale. The magnification scale may be obtained through calculation based on the first resolution and the target resolution. The magnification scale includes a ratio of a quantity of pixels of the image with the target resolution to a quantity of pixels of the image with the first resolution in a length direction and a ratio of a quantity of pixels of the image with the target resolution to a quantity of pixels of the image with the first resolution in a width direction. The offset matrix is formed by sampling offsets of all pixels in the image with the target resolution. Because the target resolution is a resolution actually required by the image, and a value of the target resolution is arbitrary, the magnification scale may be any multiple. Therefore, the target weight matrix obtained by obtaining the pixel position offset information and further performing fusion on the texture feature may be used to implement super-resolution of any multiple.

In a possible implementation of the first aspect, that the terminal performs information fusion on the pixel position offset information and the feature map to obtain a target weight matrix includes: The terminal inputs the pixel position offset information and the feature map into a first neural network model to obtain the target weight matrix.

According to the method in embodiments of this application, by using the pre-trained first neural network model, information about the offset matrix, the magnification scale, and the feature map may be fused to obtain the target weight matrix. Different from an existing super-resolution method in which a weight matrix carries only pixel position offset information, when a high-resolution image is obtained based on the target weight matrix provided in this method, an image quality loss that is similar to that caused by a conventional interpolation operation can be avoided. Therefore, image quality of the high-resolution image can be improved.

In a possible implementation of the first aspect, the first neural network model includes a network model formed by combining a convolutional neural network and a fully-connected neural network.

According to the method in this embodiment of this application, the first neural network model may be formed by combining the convolutional neural network and the fully-connected neural network. The convolutional neural network is used to convert the feature map including the texture feature, and the fully-connected neural network is used to process the pixel position offset information.

In a possible implementation of the first aspect, that the terminal performs information fusion on the pixel position offset information and the feature map to obtain a target weight matrix includes: The terminal obtains an initial weight matrix based on the offset matrix and the magnification scale; and the terminal inputs the initial weight matrix and the feature map into a second neural network model to obtain the target weight matrix.

According to the method in this embodiment of this application, another information fusion method is provided. The initial weight matrix obtained based on the offset matrix and the magnification scale is a weight matrix used for upsampling in a conventional technology. In this method, based on the conventional technology, the obtained initial weight matrix and the feature map may be input into the pre-trained second neural network model for information fusion to obtain the target weight matrix used for image upsampling in this solution. This improves flexibility of solution implementation.

In a possible implementation of the first aspect, that the terminal performs feature extraction on the image with the first resolution to obtain a feature map including a texture feature includes: The terminal inputs the image with the first resolution into a third neural network model to output the feature map.

According to the method in this embodiment of this application, the feature map may be obtained based on a neural network model, for example, an existing convolutional neural network.

In a possible implementation of the first aspect, that the terminal obtains an image with the target resolution based on the target weight matrix includes: The terminal performs upsampling on the feature map based on the target weight matrix to obtain the image with the target resolution.

According to the method in embodiments of this application, the terminal performs upsampling on the feature map based on the target weight matrix to obtain the image with the target resolution, and the obtained image has better quality than an image obtained by performing upsampling on the image with the first resolution.

A second aspect of embodiments of this application provides a model training method, including: obtaining pixel position offset information based on a training image with a first resolution, and a target resolution, and obtaining an initial weight map based on the pixel position offset information; performing feature extraction on the image with the first resolution to obtain a feature map including a texture feature; inputting the texture feature and the initial weight map into a first neural network for training to obtain a first loss value; and updating a weight parameter in the first network based on the first loss value to obtain a target neural network.

According to the model training method provided in this embodiment of this application, a trained model may be used for image super-resolution, the pixel position offset information is fused based on the existing initial weight map, and the target network obtained through training by using the method may be used for image super-resolution, so that image quality of an obtained high-resolution image is improved.

A third aspect of embodiments of this application provides a model training method, including: obtaining pixel position offset information based on a training image with a first resolution, and a target resolution; performing feature extraction on the image with the first resolution to obtain a feature map including a texture feature; inputting the pixel position offset information and the initial weight map into a second neural network for training to obtain a first loss value; and updating a weight parameter in the second neural network based on the first loss value to obtain a target neural network.

According to the model training method provided in this embodiment of this application, a trained model may be used for image super-resolution, the pixel position offset information and the feature map including the texture feature are fused, and the target network obtained through training by using the method may be used for image super-resolution, so that image quality of an obtained high-resolution image is improved.

A fourth aspect of embodiments of this application provides an image super-resolution apparatus, including: an obtaining unit, configured to obtain pixel position offset information based on an image with a first resolution, and a target resolution, where the target resolution is greater than the first resolution, and the obtaining unit is further configured to perform feature extraction on the image with the first resolution to obtain a feature map including a texture feature; and a processing unit, configured to perform information fusion on the pixel position offset information and the feature map to obtain a target weight matrix, where the obtaining unit is further configured to obtain an image with the target resolution based on the target weight matrix.

In a possible implementation of the fourth aspect, the pixel position offset information includes an offset matrix and a magnification scale, the offset matrix indicates a sampling offset of each pixel in the image with the first resolution, and the magnification scale is a ratio of the target resolution to the first resolution.

In a possible implementation of the fourth aspect, the processing unit is specifically configured to input the pixel position offset information and the feature map into a first neural network model to obtain the target weight matrix.

In a possible implementation of the fourth aspect, the first neural network model includes a network model formed by combining a convolutional neural network and a fully-connected neural network.

In a possible implementation of the fourth aspect, the processing unit is specifically configured to obtain an initial weight matrix based on the offset matrix and the magnification scale; and
input the initial weight matrix and the feature map into a second neural network model to obtain the target weight matrix.

In a possible implementation of the fourth aspect, the obtaining unit is specifically configured to input the image with the first resolution into a third neural network model to output the feature map.

In a possible implementation of the fourth aspect, the obtaining unit is specifically configured to perform upsampling on the feature map based on the target weight matrix to obtain the image with the target resolution.

A fifth aspect of embodiments of this application provides a computer program product including instructions. When the computer program product runs on a computer, the computer is enabled to perform the method according to any one of the first aspect and the possible implementations.

A sixth aspect of embodiments of this application provides a computer-readable storage medium including instructions. When the instructions are run on a computer, the computer is enabled to perform the method according to any one of the first aspect and the possible implementations.

A seventh aspect of embodiments of this application provides a chip, including one or more processors. A part or all of the processors are configured to read and execute a computer program stored in a memory, to perform the method according to any one of the possible implementations of any one of the foregoing aspects. Optionally, the chip includes the memory, and the memory and the processor are connected to each other by using a circuit or a wire. Further, optionally, the chip further includes a communication interface, and the processor is connected to the communication interface. The communication interface is configured to receive data or information or both that need to be processed. The processor obtains the data and/or the information from the communication interface, processes the data and/or the information, and outputs a processing result through the communication interface. The communication interface may be an input/output interface. In some implementations, some of the one or more processors may implement some steps in the foregoing method by using dedicated hardware. For example, processing related to a neural network model may be implemented by a dedicated neural network processor or graphics processing unit. The method provided in this application may be implemented by one chip, or may be implemented by a plurality of chips through collaboration.

For technical effects brought by any one of the implementations of the fourth aspect, the fifth aspect, the sixth aspect, or the seventh aspect, refer to technical effects brought by a corresponding implementation of the first aspect. Details are not described herein again.

According to the foregoing technical solutions, it can be learned that embodiments of this application have the following advantages.

According to the method in embodiments of this application, the terminal obtains the pixel position offset information based on the image with the first resolution, and the target resolution. In addition, the terminal further extracts the texture feature of the image with the first resolution, and obtains the target weight matrix through fusion of the pixel position offset information and the texture feature. The target weight matrix is used to provide a sampling weight of each pixel in an upsampling operation in the super-resolution method. The pixel position offset information and the texture feature are fused in the target weight matrix in this solution, and a high-resolution image is obtained based on the target weight matrix. Therefore, an image quality loss that is similar to that caused by a conventional interpolation operation and that is caused when a weight matrix is obtained based on only the pixel position offset information can be avoided. Therefore, image quality of the high-resolution image can be improved.

**BRIEF DESCRIPTION OF DRAWINGS**

FIG. 1 is a schematic diagram of an application scenario of an image super-resolution method;
FIG. 2 is a schematic diagram of a system architecture of an image super-resolution method according to an embodiment of this application;
FIG. 3 is a schematic diagram of an embodiment of an image super-resolution method according to an embodiment of this application;
FIG. 4a is a schematic diagram of an embodiment of a feature map extraction method according to an embodiment of this application;
FIG. 4b is a schematic diagram of an embodiment of a feature fusion module according to an embodiment of this application;
FIG. 5 is a schematic diagram of another embodiment of an image super-resolution method according to an embodiment of this application;
FIG. 6 is a schematic diagram of a product implementation form of an image super-resolution method according to an embodiment of this application;
FIG. 7 is a schematic diagram of a training process of a super-resolution module according to an embodiment of this application;
FIG. 8a is a schematic diagram of a training dataset collection process according to an embodiment of this application;
FIG. 8b is a schematic diagram of a process of obtaining a high-resolution dataset and a low-resolution dataset according to an embodiment of this application;
FIG. 8c is a schematic diagram of a structure of a super-resolution model according to an embodiment of this application;
FIG. 8d is a schematic diagram of a super-resolution model training process according to an embodiment of this application;
FIG. 8e is a schematic diagram of an application scenario in which a super-resolution model is deployed in a terminal according to an embodiment of this application;
FIG. 9 is a schematic diagram of an embodiment of an image super-resolution apparatus according to an embodiment of this application; and
FIG. 10 is a schematic diagram of an embodiment of a terminal according to an embodiment of this application.

**DESCRIPTION OF EMBODIMENTS**

Embodiments of this application provide an image super-resolution method, to convert a low-resolution image into a high-resolution image for display. Because pixel position offset information and a texture feature are fused in a target weight matrix, an image quality loss caused when interpolation processing is performed by relying on only the pixel position offset information can be avoided, and image quality of the high-resolution image can be improved.

For ease of understanding, the following briefly describes some technical terms in embodiments of this application.

1. To avoid confusion, the following describes and distinguishes several terms related to a resolution.

Image resolution: It means an amount of information stored in an image, that is, a quantity of pixels in each inch of the image. The resolution is usually represented by "a quantity of horizontal pixels $\times$ a quantity of vertical pixels" or by a specification code. For example, if an image resolution is $640\times480$, it indicates that a quantity of horizontal pixels is 640, a quantity of vertical pixels is 480, and a resolution is 307,200 pixels, that is, 300,000 pixels that are commonly known. A specification code P indicates progressive scanning. A resolution corresponding to 720P is $1280\times720$. Similarly, a resolution corresponding to 1080P is $1920\times1080$. A resolution may alternatively be described by using a specification code K. Because a digital image includes a huge quantity of pixels, K is usually used to represent a pixel value in a horizontal direction, and an aspect ratio is not considered, where 1K=$2^{10}$=1024, 2K=$2^{11}$=2048, and 4K=$2^{12}$=4096. A 4K resolution means that a quantity of pixel values in each row in a horizontal direction reaches or is close to 4096.

It may be understood that a higher resolution of an image indicates more data included and richer details that can be presented, but more computer storage resources are required in this case.

Display resolution: The display resolution is a physical resolution of a computer display itself. For a CRT display, it refers to phosphor dots on a screen. For an LCD display, it refers to a pixel on a display screen. The display resolution is determined during manufacturing of the display. It describes a quantity of pixels of the display itself and is an inherently unchangeable value. The display resolution is usually represented in a format of "quantity of horizontal pixels × quantity of vertical pixels", for example, 800×600, 1024×768, and 1280×1024, or represented by a specification code. The display resolution is of great significance to a display device. For screens of a same size, a higher resolution indicates a more delicate screen, that is, details of an image can be presented more clearly. In this case, visual experience of a user can be greatly improved.

A screen resolution is a resolution used for actually displaying an image, and the screen resolution can be set based on a user requirement. An upper limit of the screen resolution is limited by a value of a display resolution.

2. Image super-resolution (super resolution, SR) is a process of restoring a high-resolution (high resolution, HR) image or image sequence from a low-resolution (low resolution, LR) image or image sequence, and is usually referred to as super-resolution.

3. The following describes terms used in an image upsampling process.

(1) Upsampling: It is an interpolation process applied to digital signal processing. After upsampling is performed on a digital sequence, an output result is approximately equal to a sequence obtained after sampling is performed on an initial analog signal at a higher sampling rate.

(2) Image upsampling: Similar to upsampling, image upsampling is an interpolation process. An image with a first resolution may be regarded as a two-dimensional digital matrix. After upsampling is performed on the matrix, an output result is approximately equal to a digital matrix obtained after sampling is performed on an analog signal image in a real world at a higher sampling rate, that is, an image with a target resolution. For ease of description of the solutions of this application, the image upsampling process is described as follows: Sampling is performed on pixels in the image with the first resolution based on pixels in the image with the target resolution, and weighted averaging is performed. A detailed process is as follows: A sampling position of a corresponding image with the first resolution is determined through calculation based on pixel coordinates of a high-resolution image, and a sampling center and an offset are further determined through calculation. A pixel at the sampling center and a pixel in a neighborhood with a fixed size around the sampling center are selected as to-be-processed pixels. Then, a sampling weight is calculated based on the offset, and weighted averaging is performed on to-be-processed pixels in the neighborhood by using the sampling weight, to obtain an upsampling result. It should be noted that a quantity of selected pixels in the neighborhood near the sampling center may be preset, and a specific value of the quantity is not limited.

(3) Pixel coordinates: The pixel coordinates are coordinates of a position of a pixel in an image. The pixel coordinates have to be integers. An image with a target resolution is used as an example. $x\_out$ and $y\_out$ respectively represent coordinates of a pixel in the image with the target resolution in a length direction and a width direction, and satisfy $0 \leq x\_out < w\_out$ and $0 \leq y\_out < h\_out$. $w\_out$ represents a width of the target resolution, and $h\_out$ represents a length of the target resolution.

(4) Sampling position: In a process in which an image with a target resolution is obtained by performing image upsampling on an image with a first resolution, an output result of each pixel in the image with the target resolution needs to be obtained from the image with the first resolution through sampling. A sampling position is obtained as follows: A calculation process related to a magnification multiple is performed on a position of each pixel in the image with the target resolution, and then a corresponding position that is in the image with the first resolution is obtained. The following uses a pixel ($x_{out}$, $y\_out$) in the image with the target resolution as an example to describe a process of determining a sampling position of the pixel through calculation.

$$sample\_pos_x = \frac{w\_in}{w\_out} \cdot x\_out$$

$$sample\_pos_y = \frac{h\_in}{h\_out} \cdot y\_out,$$

where

$sample\_pos_x$ represents coordinates of the sampling position in a length direction; $sample\_pos_y$ represents coordinates of the sampling position in a width direction; w_in represents a pixel width of the image with the first resolution; $h\_in$ represents a pixel length of the image with the first resolution; $w\_out$ represents a pixel width of the image with the target resolution; and h_out represents a length of the target resolution.

(5) Sampling center: Pixel coordinates of the sampling center may be obtained after a rounding operation is performed on a sampling position.

The following formula is an example of a rounding operation:

$$center_x = \lfloor sample\_pos_x \rfloor$$

$$center_y = \lfloor sample\_pos_y \rfloor,$$

where
$center_x$ represents coordinates of the sampling center in a width direction; $center_y$ represents coordinates of the sampling center in a length direction; and $\lfloor n \rfloor$ represents rounding down of n.

(6) Offset: It is also referred to as a sampling offset. It is a distance between a sampling position and a sampling center. The offset is an important basis for generating a sampling weight. For example, a formula for calculating an offset is as follows:

$$offset_x = sample\_pos_x - center_x$$

$$offset_y = sample\_pos_y - center_y,$$

where
$offset_x$ represents an offset distance of the sampling position relative to the sampling center in a width direction; and $offset_y$ represents an offset distance of the sampling position relative to the sampling center in a length direction.

A matrix formed by offsets of all pixels in an image with a target resolution is an offset matrix (offset matrix).

The following describes embodiments of this application with reference to the accompanying drawings. It is clear that the described embodiments are merely some but not all of embodiments of this application. A person of ordinary skill in the art may learn that, with technology development and emergence of a new scenario, the technical solutions provided in embodiments of this application are also applicable to a similar technical problem.

In this specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments described herein can be implemented in other orders than the order illustrated or described herein. Moreover, the terms "include", "contain", and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

The image super-resolution method provided in embodiments of this application may be applied to various electronic devices with a display function, for example, a mobile terminal, a tablet computer, a notebook computer, a computer, a television, an all-in-one machine, or a projector. A specific type of an electronic device is not limited. Output image content includes various types of media information, a real-time operation image, or the like, and may be a static image or a dynamic image, that is, a video. Content of an image displayed through super-resolution is not limited in this application. The following uses a terminal device and an image as examples for description.

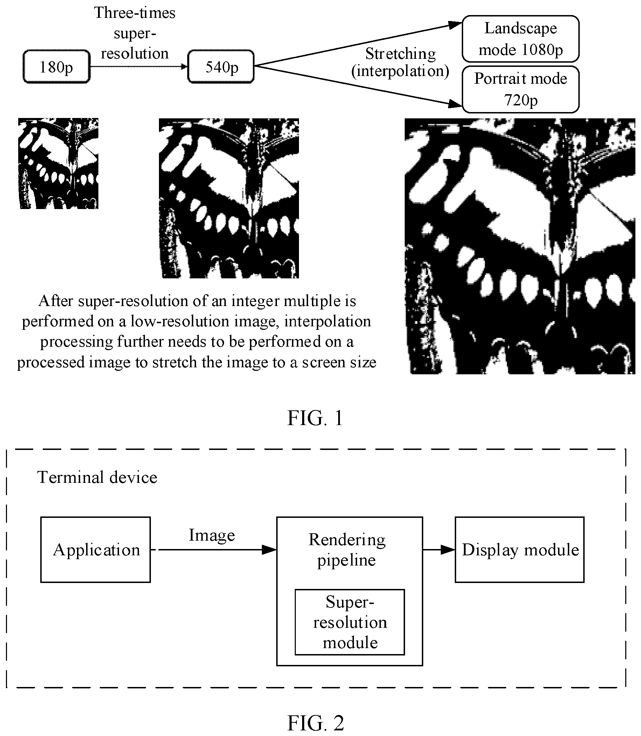

First, an application scenario of the image super-resolution method is described with reference to FIG. 1.

With the development of electronic imaging technologies, a screen resolution is constantly increased. When an image is displayed in an electronic device, a screen resolution is relatively high, but an original resolution of an image resource is usually relatively low, and usually cannot perfectly adapt to the screen resolution. As shown in FIG. 1, an original image resolution is 180P. Even if an image is zoomed in to 540P through three-times super-resolution, because a screen resolution is 1080P when a mobile phone is in a landscape mode and the screen resolution is 720P when the mobile phone is in a portrait mode, the 540P image still needs to be interpolated and stretched if there is a need to adapt to the screen resolution. As a result, there may be a negative effect caused by interpolation, for example, an image is jagged or blurred.

The image super-resolution method provided in embodiments of this application is used to implement super-resolution at any multiple and adapt to a display of a terminal device, and can further reduce an image quality loss caused by interpolation in a conventional super-resolution method, thereby improving image quality.

The following describes a system architecture of the image super-resolution method in embodiments of this application. Refer to FIG. 2.

FIG. 2 shows an example of a super-resolution application scenario of a mobile terminal. The mobile terminal includes three parts: an application, a rendering pipeline, and a display module. The application of the mobile terminal sends, to the rendering pipeline, an image or a video frame that needs to be displayed. The rendering pipeline invokes a super-resolution module to zoom in the image and perform rendering. Finally, a high-resolution high-quality image is displayed on a display device by using the display module.

According to the image super-resolution method provided in embodiments of this application, image super-resolution is implemented by using an improved super-resolution module.

According to an actual application scenario, during super-resolution of a low-resolution image to obtain a target resolution, the super-resolution module may be specifically implemented by using a super-resolution model.

A formal description of the super-resolution process is as follows:

$$image\_out = \text{SR\_model}(LR\_image, \ (height_{LR}, \ width_{LR}), \ (height_{dst}, \ width_{dst}))$$

*LR_image* represents a low-resolution image on which super-resolution is to be performed; *image_out* represents a high-resolution image generated by using the super-resolution model; ($height_{dst}$, $width_{dst}$) represents a target resolution; ($height_{LR}$, $width_{LR}$) represents an original resolution; and SR_model represents the super-resolution model.

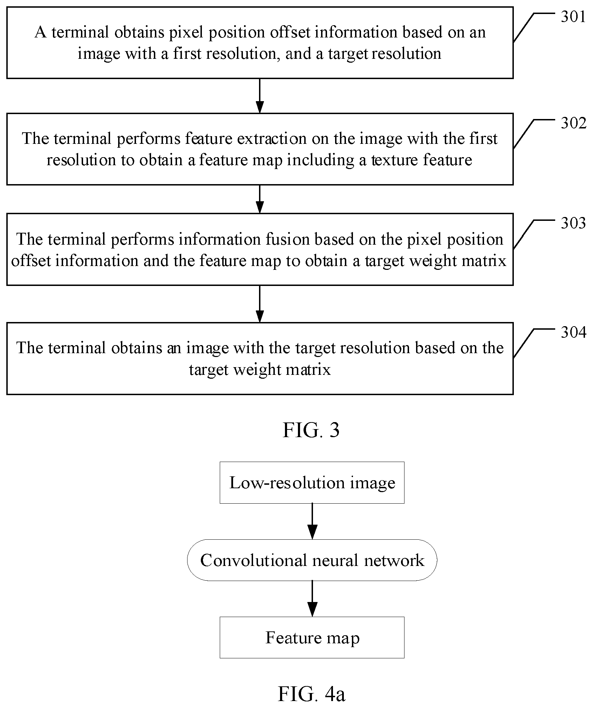

The following describes in detail an image super-resolution method provided in an embodiment of this application. Refer to FIG. 3.

301: A terminal obtains pixel position offset information based on an image with a first resolution, and a target resolution.

An image or a video frame in an application of the terminal needs to be displayed on a display screen or a display window of the terminal by using the target resolution. The target resolution may be a resolution preset in the application of the terminal, or may be determined based on a use scenario determined by a user operation. A specific value thereof is not limited. It may be understood that the target resolution is usually higher than the first resolution. The terminal obtains an original image in the application. A resolution of the original image is the first resolution. When the first resolution is less than the target resolution, the terminal needs to perform super-resolution processing on the image to obtain an image or a video frame with the target resolution. Because a video frame includes sequential images, in this embodiment and subsequent embodiments of this application, an image is used as an example to describe the image super-resolution method provided in this embodiment of this application.

The pixel position offset information includes an offset matrix and a magnification scale. The offset matrix indicates a position offset of each pixel in the image with the first resolution when the pixel is amplified to the target resolution, and the magnification scale (scale) is a ratio of the target resolution to the first resolution, and includes a ratio of a pixel value of the image with the target resolution in a length direction to a pixel value of the image with the first resolution in the length direction and a ratio of a pixel value of the image with the target resolution in the width direction to a pixel value of the image with the first resolution in the width direction. Considering that values of the first resolution and the target resolution are arbitrary, the magnification scale that needs to be satisfied by super-resolution also needs to be any multiple.

The terminal may obtain the offset matrix and the magnification scale based on the image with the first resolution, and the target resolution based on an existing algorithm. For a method for calculating the offset matrix, refer to the foregoing description of the terms related to the image upsampling process.

A formal description of this step is as follows:

$$offset, \ scale = \text{GET\_POSITION\_INFO}((height_{LR}, \ width_{LR}), \ (height_{HR}, \ width_{HR}))$$

offset represents information about a position offset generated when the image with the target resolution is mapped to a low-resolution image; *scale* represents a ratio of the target resolution to the first resolution; ($height_{LR}$, $width_{LR}$) represents a resolution value of a low-resolution image input to a super-resolution model; ($height_{HR}$, $width_{HR}$) represents a resolution of a high-resolution image corresponding to the low-resolution image, that is, the target resolution for super-resolution; and GET_POSITION_INFO represents calculation of position offset information offset and a magnification multiple *scale* based on the target resolution and the original resolution.

302: The terminal performs feature extraction on the image with the first resolution to obtain a feature map including a texture feature.

The terminal extracts the texture feature of the image with the first resolution based on a preset neural network model, to obtain the feature map. The feature map may be specifically a multi-channel feature map.

Optionally, the preset neural network model is a pre-trained neural network or an existing neural network. This is not specifically limited herein. Optionally, a type of the neural network is a convolutional neural network (convolutional neural network, CNN).

A formal description of this step is as follows:

$$feature\ maps = \mathrm{CNN}(LR\_image),$$

where

*LR_image* represents a low-resolution image input to the super-resolution model; CNN represents a convolutional neural network for feature extraction; and *feature maps* represents a multi-channel feature map output after feature extraction is performed by using the convolutional neural network.

In a process of obtaining the feature map, a resolution of the image is usually not changed, but a quantity of channels of the image can be changed. As shown in FIG. 4a, after processing is performed by using the convolutional neural network, an image whose original resolution is (*height, width*) and whose quantity of channels is *channel* (if the image is in an RGB format, a value of *channel* is 3; and if the image is a grayscale image, the value of *channel* is 1) is converted into a feature map whose shape is corresponding to (*height, width, channel'*) and a value of *channel'* is related to CNN network design.

It should be noted that an execution sequence of step 301 and step 302 is not specifically limited.

303: The terminal performs information fusion on the pixel position offset information and the feature map to obtain a target weight matrix.

The target weight matrix is used to provide weight information required by an upsampling step in the super-resolution process. There are a plurality of methods for performing, by the terminal, information fusion based on the pixel position offset information and the feature map to obtain the target weight matrix.

Optionally, the terminal inputs the offset matrix and the magnification scale that are obtained in step 301 and the feature map obtained in step 302 into a preset first neural network model, to output the target weight matrix.

Optionally, the terminal obtains an initial weight matrix based on the offset matrix and the magnification scale that are obtained in step 301; and then the terminal performs information fusion on the initial weight matrix and the feature map that is obtained in step 302, to obtain the target weight matrix. Information fusion may be implemented by using a neural network, and optionally, includes a common manner of channel fusion in the neural network: operator concat (concat), concat and add (concat + add), an attention (attention) mechanism, or the like. A formal description of this step is as follows:

$$weight\ maps = \mathrm{OFFSET\_TRANSFORM}(offset,\quad scale)$$

$$weight\ matrix = \mathrm{FUSION}(\mathrm{TRANSFORM}(feature\ maps),\quad weight\ maps)$$

*weight maps* represents a weight value generated based on the pixel position information; OFFSET_TRANSFORM represents a position information processing algorithm and may be implemented by using a fully-connected neural network or another non-linear mapping algorithm; *feature maps* represents a multi-channel feature map extracted in the feature extraction step; TRANSFORM represents feature transform on the multi-channel feature map; FUSION represents performing fusion on texture feature information and the pixel position offset information to generate a weight matrix; and *weight matrix* represents the target weight matrix.

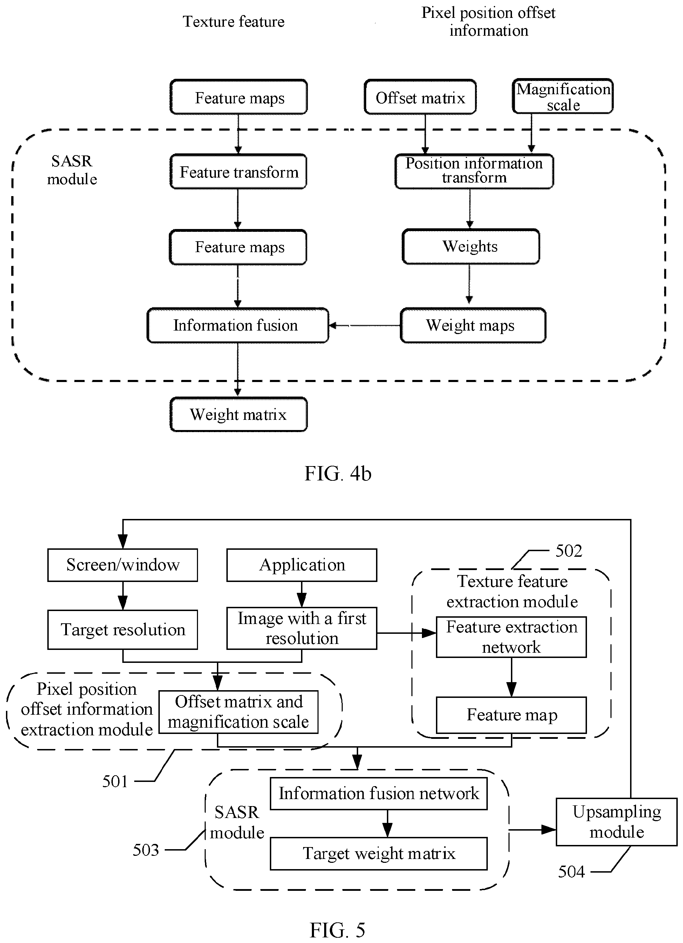

As shown in FIG. 4b, in a texture feature processing procedure, a feature transform operation is mainly performed on an extracted feature map, so that feature information can adapt to pixel position information, and the feature transform does not change a resolution of the feature map. In a procedure of processing pixel position offset information, the position information may be represented by an offset matrix and a magnification scale, and a preliminary weight map is generated through position information transform. Finally, information fusion is performed on the weight map including the pixel position offset information and the feature map including pixel texture feature information, to generate a final target weight matrix.

304: The terminal obtains an image with the target resolution based on the target weight matrix.

Upsampling is performed on the feature map by using *weight matrix,* to obtain a super-resolution image with the target resolution. Because required magnification scale information is fused in the target weight matrix, super-resolution of any multiple may be performed on the image with the first resolution based on the magnification scale to obtain the image with the target resolution.

A formal description of this step is as follows:

$$SR_{image} = Upsample\_Transform(feature\ maps,\quad weight\ matrix),$$

where

*SR_image* represents performing fusion on the feature information and the pixel position information to generate a weight matrix; and Upsample_Transform represents performing upsampling and channel switching on the feature map by using the weight matrix, where the image with the target resolution may be output.

FIG. 5 is a schematic diagram of a system in which an image super-resolution method is deployed according to an embodiment of this application.

As shown in FIG. 5, a technology and a system that are deployed on a terminal device and that can adapt to a screen resolution by using a super-resolution module that can implement super-resolution of any multiple are presented. The system mainly includes a pixel position offset information extraction module (or referred to as an offset generation module) 501, a texture feature extraction module 502, a feature fusion module that may also be referred to as a scale arbitrary super-resolution (scale arbitrary super resolution, SASR) module 503 in this embodiment of this application, an upsampling module 504, and the like. FIG. 5 shows an example of a scenario in which a terminal device performs super-resolution of any multiple. Optionally, training of a feature extraction network and an information fusion network is completed on a PC side; and after the training is completed, the pixel position offset information extraction module 501, the texture feature extraction network 502, the SASR module 503, and the upsampling module 504 are deployed on a computing chip on a mobile side.

The terminal device is used as a system body. An application carried by the terminal device provides an image or a video frame that needs to be displayed on a screen or a window. Usually, resolutions of the screen and the window are greater than a resolution of an image or a video. In this case, the pixel position offset information extraction module 501 obtains a resolution of an original image (that is, a first resolution) and a resolution of a target window or screen (that is, a target resolution), generates an offset matrix through mapping between high-resolution and low-resolution pixels, and calculates magnification scales scale of both a length and a width of the image. A preliminary weight matrix (that is, an initial weight matrix) weight maps may be obtained through calculation based on the scales and the offset by using a neural network. The texture feature extraction module 502 obtains the image with the first resolution, and performs feature extraction. Feature transform is performed on an extracted multi-channel feature map to generate a new feature map (feature maps), and information fusion is performed on the feature maps and the weight maps by using the SASR module 503 to generate a target weight matrix. The upsampling module 504 performs, by using the weight matrix, upsampling on the multi-channel feature map extracted by the feature extraction network, to obtain a high-quality image with the target resolution.

It can be learned based on the description of the image super-resolution method in the foregoing embodiment that, the super-resolution model in the image super-resolution method needs to be obtained through pre-training before being deployed on the terminal device. Specifically, in this embodiment of this application, the super-resolution model mainly includes four parts: a texture feature extraction module, a pixel position offset information extraction module, an SASA module, and an upsampling module. The texture feature extraction module may be implemented based on a convolutional neural network model, and the SASA module may be implemented based on a model including a convolutional neural network and a fully-connected neural network. Optionally, the SASR module includes a neural network, and a parameter of the neural network undergoes updating and iteration. The texture feature extraction module includes an existing neural network, and the offset generation module and the upsampling module are completed by common mathematical calculation. In other words, training of the super-resolution model involves only the SASR module. Optionally, the texture feature extraction module and the SASR module include neural networks, and parameters of the neural networks undergo updating and iteration. The offset generation module and the upsampling module are completed through common mathematical calculation. In other words, training of the super-resolution model involves the texture feature extraction module and the SASR module.

In this embodiment of this application, a description is provided by using an example in which the texture feature extraction module and the SASR module include neural networks, parameters of the neural networks undergo updating and iteration, and the offset generation module and the upsampling module are completed through common mathematical calculation.

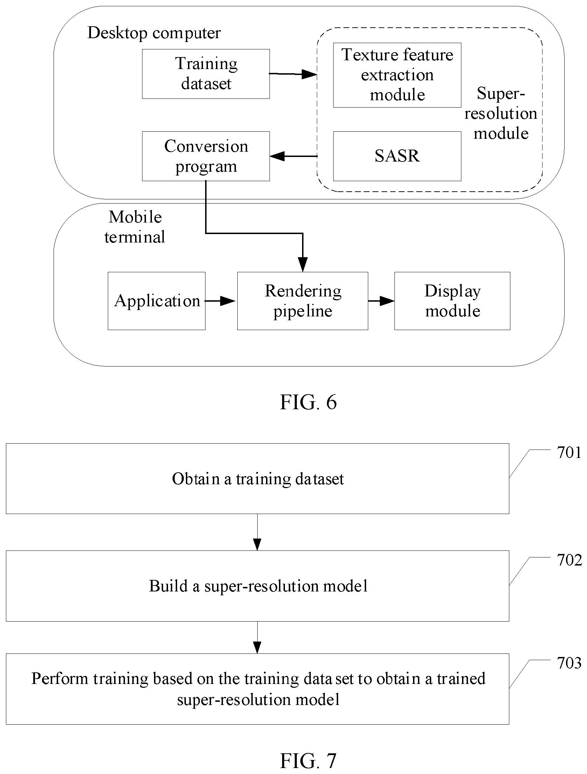

FIG. 6 is a schematic diagram of a product implementation form of an image super-resolution method according to an embodiment of this application. A training process of a neural network in this method is completed on a first electronic device side. The first electronic device may be, for example, an electronic device with a relatively large quantity of computing resources and storage resources, for example, a server or a desktop computer. In this embodiment, a desktop computer (PC) is used as an example for description. The trained neural network is deployed on a second electronic device side to implement image super-resolution. The second electronic device may be various electronic devices with a display function, including a mobile terminal, a tablet computer, a wearable device, a smart screen, or the like. In this embodiment, a mobile terminal is used as an example for description only. As shown in FIG. 6, a training dataset is first made by using a collected high-definition dataset, and a super-resolution model (including a texture feature extraction module and an SASR module) is trained on the PC. A conversion program (ShaderNN converter) based on a rendering pipeline converts the model into a form that can run on a mobile terminal, an application of the mobile terminal sends, to the rendering pipeline, an image that needs to be displayed, and the rendering pipeline invokes a converted super-resolution model to perform forward inference and rendering. Finally, a high-quality high-resolution image is displayed by using a display module.

The following describes a training process of a super-commit model in an embodiment of this application. Refer to FIG. 7.

701: Obtain a training dataset.

First, image pairs with different resolution multiple relationships need to be created as training datasets.

The training datasets include a high-resolution dataset and a low-resolution dataset.

A high-definition image needs to be collected first. Sources of high-definition image data include a public dataset, network crawling, self-collection, and a high-quality image including a building, a landscape, a person, and the like. A low-resolution dataset is generated from a high-resolution image. The high-definition image is cropped, and then downsampling is performed at different scales to reduce a resolution.

For this task, a high-definition dataset including various textures and lines needs to be constructed, and high-definition images with different texture features, including content such as a building, a person, and a landscape, are collected from the Internet and a public dataset. The high-definition data is used as a label, and data obtained after downsampling is performed is used as data.

A formal description of this step is as follows:

$$labelset = \{buildings|person|landscape\,...\}$$

$$labelset_\downarrow = \mathrm{Downsample}(labelset)$$

$$Dataset = \{labelset, dataset \mid dataset \in labelset_\downarrow\},$$

where

$Dataset$ represents a training data set; $labelset$ represents a collected high-definition image; $dataset$ represents a low-resolution image made by using the high-definition image through downsampling; and Downsample represents downsampling, that is, an operation of zooming out an image, where a downsampling multiple is not constant.

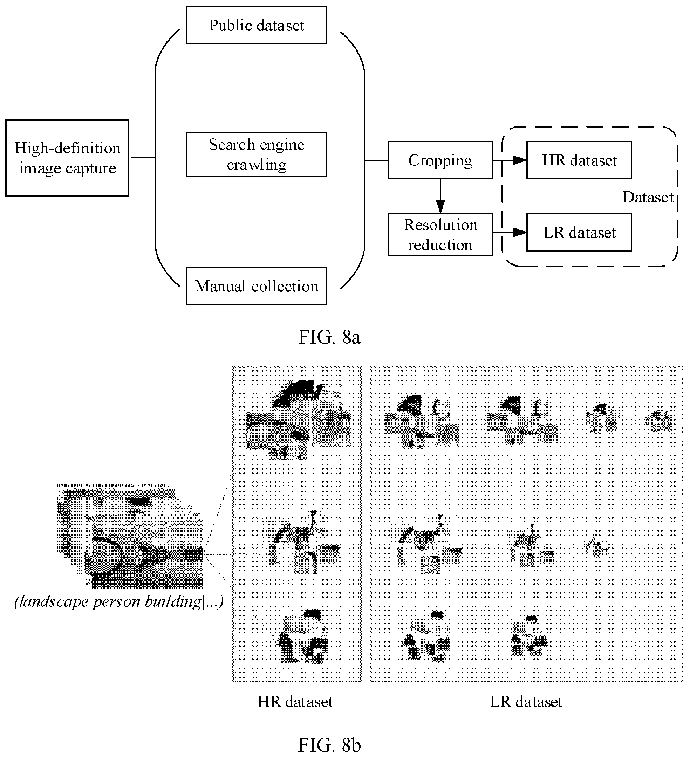

Specifically, as shown in FIG. 8a, an implementation procedure of step 1 of collecting a dataset is shown. First, a high-definition image is captured, where the high-definition image includes a public dataset, a dataset found by using a search engine, and a dataset manually collected. Then, several cropping sizes of image patches (patch), that is, resolution values, are generated. Optionally, a size range is within a range of (90, 400) (pixel $\times$ pixel). For example, several cropping sizes such as (128, 128), (192, 192), (256, 384), and (384, 384) may be generated. The collected high-definition image is evenly cropped into resolution values corresponding to several cropping sizes, to obtain patches of different cropping sizes. The patches of different cropping sizes are image data in a high-resolution image dataset. Then, a series of corresponding low-resolution sizes are determined for a patch of each cropping size by using a low-resolution size generator. For example, for a patch of a cropping size of (128, 128), (96, 96), (64, 64), (48, 48), (64, 48), (48, 64), and (32, 32) may be generated. For a patch obtained based on each resolution obtained after cropping is performed, downsampling corresponding to a low-resolution size is performed to obtain low-resolution images with different reduced scales as a low-resolution image dataset.

FIG. 8b shows the following case: Patches of different sizes are generated from an original high-definition image to form an HR dataset, and then a series of downsampling operations is performed on a patch of each size to generate a series of low-resolution images to form an LR dataset. In the figure, a leftmost side indicates collected high-definition images, including a person (person), a building (building), a landscape (landscape), and the like. The following images are a high-resolution dataset (HR dataset) and a low-resolution dataset (LR dataset) successively.

702: Build a super-resolution model.

In this embodiment of this application, a process of performing super-resolution on a low-resolution image to obtain a high-resolution image mainly involves four parts: a feature extraction module, an offset generation module, an SASR module, and an upsampling module. The feature extraction module is configured to extract a pixel texture feature of a low-resolution image based on a convolutional neural network model. Optionally, the pixel texture feature is extracted by using the convolutional neural network model, and a multi-channel feature of the low-resolution image is extracted. A model structure may be designed and built based on platform computing power. The feature extraction module usually does not change a resolution of an image, but may change a quantity of channels of the image. The offset generation module is configured to: generate an offset matrix including pixel position information, and obtain an image magnification scale. The SASR module is configured to fuse a pixel texture feature and the pixel position information, that is, perform information fusion based on a multi-channel feature, the offset matrix, and the magnification scale, to generate a weight matrix. Optionally, the information fusion method includes concat, concat + add, or attention. The upsampling module is configured to perform, based on the target weight matrix generated by the SASA module, upsampling on a feature map corresponding to the multi-channel feature, to obtain a super-resolution image with a target resolution.

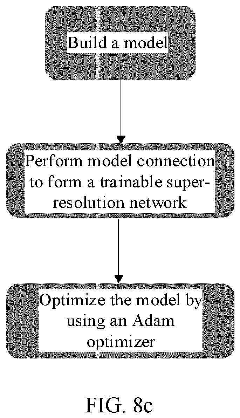

As shown in FIG. 8c, a model is built, the model is connected to form a trainable super-resolution network, model training is performed based on the training dataset obtained in step 701, and finally the model is optimized by using an optimizer. Optionally, an adaptive moment estimation (adaptive moment estimation, Adam) optimizer is selected as the optimizer. The model training process is a conventional technology, and details are not described herein. It should be noted that, in a plurality of iteration processes of model training, training data image pairs selected in each iteration process have a same magnification scale, and training data image pairs used in different iteration training in the plurality of iteration processes may have different magnification scales. In this case, a range of a super-resolution magnification scale applicable to the super-resolution model can be widened.

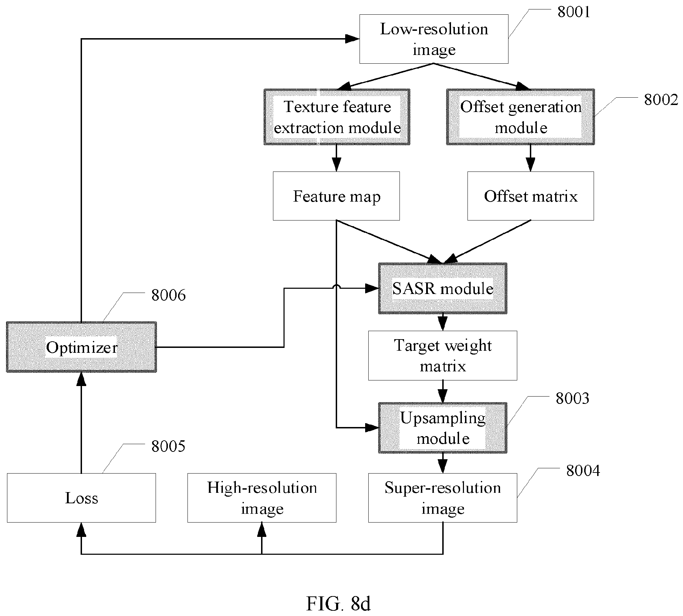

For a specific model structure of the super-resolution model, refer to FIG. 8d. The texture feature extraction module and the SASR module are established based on the foregoing description, and then connection between network data streams is completed based on a procedure performed by an offset generation module 8002 and an upsampling module 8003 that are provided in FIG. 8d, to complete a trainable super-resolution network model.

703: Perform training based on the training dataset to obtain a trained super-resolution model.

Finally, as shown in FIG. 8d, low-resolution images 8001 with different resolutions are input into a super-resolution network, and the model is used to process the low-resolution images, output a super-resolution image 8004, calculate a loss 8005 between the super-resolution image and a high-resolution image. Specifically, for example, the loss 8005 is a regression loss (huber loss). An optimizer 8006 is used to optimize a loss function. Specifically, for example, an Adam optimizer is used to update a model weight until the loss function converges, to obtain a trained super-resolution model.

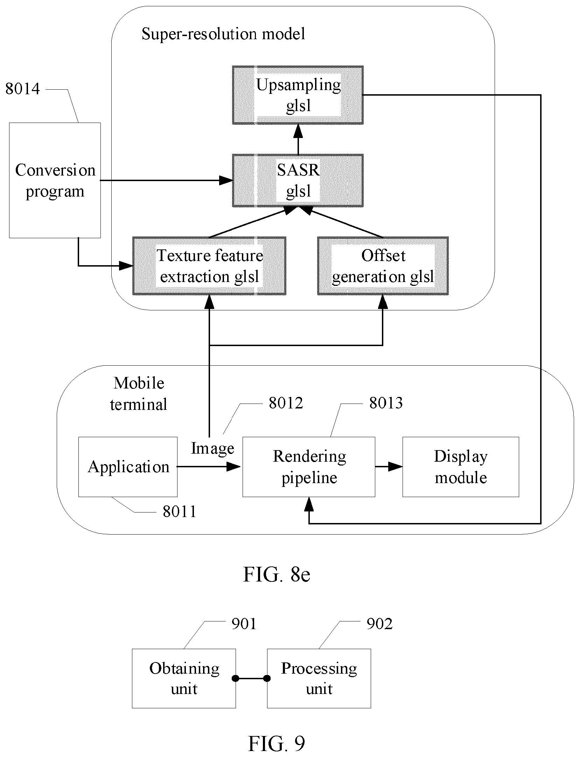

As shown in FIG. 8e, after a super-resolution model is trained, the trained super-resolution model is deployed on a mobile terminal, and is implemented based on a glsl language. For an original rendering pipeline, an image 8012 in an application (APP) 8011 needs to be displayed, and the image is zoomed in or zoomed out to a target resolution through bilinear interpolation in a rendering pipeline 8013, and then displayed on a screen. A pipeline adapted to an algorithm for super-resolution of arbitrary multiple uses a model of super-resolution of arbitrary multiple instead of a bilinear interpolation algorithm. A texture feature extraction module and an SASR module in the trained model are converted into the glsl language by using a conversion program (shaderNN converter) 8014. An offset generation module and an upsampling module in the super-resolution model are manually converted into the glsl language to adapt to the entire super-resolution model. After the super-resolution model is deployed, the image enters the rendering pipeline. The rendering pipeline invokes, based on an Opengl library (Opengl libs), each module that has been converted into a shading language (OpenGL Shading Language, glsl) language form, to process the image 8012. In addition, the pipeline sends a resolution of a target window or screen to the super-resolution model to calculate an offset or other information. Finally, an image resolution generated by using the model is the same as the resolution of the target window or screen.

In an existing learning-based image super-resolution method, super-resolution is implemented by using a sub-pixel convolution layer. Due to a limitation on a network structure, a network model can implement only super-resolution of a fixed integer multiple. If a magnification multiple needs to be changed, the network needs to be redesigned and retrained. However, according to the image super-resolution method provided in this embodiment of this application, based on an innovative upsampling process, upsampling is performed by using the target weight matrix in which the pixel position offset information and the texture feature are fused, so that super-resolution of any multiple can be implemented. In a process of obtaining the target weight matrix, in this solution, a pre-trained neural network model (that is, the feature fusion module in this application) is input based on an actually required magnification scale, and the output target weight matrix is used for upsampling, so that a magnification scale (that is, any multiple) that satisfies an actual requirement can be obtained. In addition, the pixel position offset information and the texture feature are fused in the target weight matrix in this solution, thereby avoiding a problem of an image quality loss that is similar to that caused by an interpolation super-resolution technology and that is caused when upsampling is performed based on only the pixel position offset information.

The foregoing describes the image super-resolution method provided in this application. The following describes an image super-resolution apparatus for implementing the image super-resolution method. FIG. 9 is a schematic diagram of an embodiment of an image super-resolution apparatus according to an embodiment of this application.

Only one or more of the modules in FIG. 9 may be implemented by using software, hardware, firmware, or a combination thereof. The software or firmware includes but is not limited to computer program instructions or code, and may be executed by a hardware processor. The hardware includes but is not limited to various integrated circuits, for example, a central processing unit (CPU), a digital signal processor (DSP), a field programmable gate array (FPGA), or an application-specific integrated circuit (ASIC).

The image super-resolution apparatus includes:

an obtaining unit 901, configured to obtain pixel position offset information based on an image with a first resolution, and a target resolution, where the target resolution is greater than the first resolution, and

the obtaining unit 901 is further configured to perform feature extraction on the image with the first resolution to obtain a feature map including a texture feature; and

the processing unit 902, configured to perform information fusion on the pixel position offset information and the feature map to obtain a target weight matrix, where

the obtaining unit 901 is further configured to obtain an image with the target resolution based on the target weight matrix.

Optionally, the pixel position offset information includes an offset matrix and a magnification scale, the offset matrix indicates a sampling offset of each pixel in the image with the first resolution, and the magnification scale is a ratio of the target resolution to the first resolution.

Optionally, the processing unit 902 is specifically configured to input the pixel position offset information and the feature map into a first neural network model to obtain the target weight matrix.

Optionally, the first neural network model includes a network model formed by combining a convolutional neural network and a fully-connected neural network.

Optionally, the processing unit 902 is specifically configured to: obtain an initial weight matrix based on the offset matrix and the magnification scale; and input the initial weight matrix and the feature map into a second neural network model to obtain the target weight matrix.

Optionally, the obtaining unit 901 is specifically configured to input the image with the first resolution into a third neural network model to output the feature map.

Optionally, the obtaining unit 901 is specifically configured to perform upsampling on the feature map based on the target weight matrix to obtain the image with the target resolution.

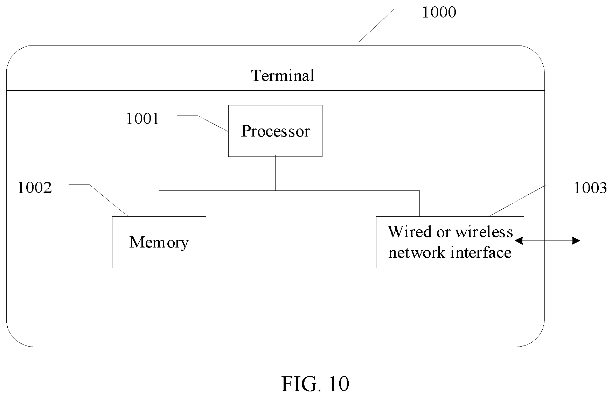

FIG. 10 is a schematic diagram of an embodiment of a terminal according to an embodiment of this application.

The terminal 1000 provided in this embodiment may be various terminals with a display function, for example, a mobile phone, a tablet computer, a desktop computer, a smart screen, or a wearable device. A specific device form of the terminal 1000 is not limited in this embodiment of this application.

The terminal 1000 may vary greatly due to different configurations or performance, and may include one or more processors 1001 and a memory 1002. The memory 1002 stores a program or data.

The memory 1002 may be a volatile memory or a non-volatile memory. Optionally, the processor 1001 is one or more central processing units (CPU, central processing unit). The CPU may be a single-core CPU, or may be a multi-core CPU. The processor 1001 may communicate with the memory 1002, and execute, on the terminal 1000, a series of instructions in the memory 1002.

The terminal 1000 further includes one or more wired or wireless network interfaces 1003, for example, an Ethernet interface.

Optionally, although not shown in FIG. 10, the terminal 1000 may further include one or more power supplies and one or more input/output interfaces. The input/output interface may be configured to connect to a display, a mouse, a keyboard, a touchscreen device, a sensor device, or the like. The input/output interface is an optional component, and may or may not exist. This is not limited herein.

For a procedure performed by the processor 1001 in the terminal 1000 in this embodiment, refer to the method procedure described in the foregoing method embodiments. Details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of **this** application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this **application** essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage **medium** includes any medium that can store program code, for example, a USB flash drive, a removable **hard disk,** a read-only memory (read-only memory, ROM), a random access memory (random access memory, RAM), a floppy disk, or a compact disc.

**Claims**

1. An image super-resolution method, comprising:

   obtaining (301), by a terminal (1000), pixel position offset information based on an image with a first resolution, and a target resolution, wherein the target resolution is greater than the first resolution, wherein the pixel position offset information comprises an offset matrix and a magnification scale, the offset matrix indicates a sampling offset of each pixel in the image with the first resolution, and the magnification scale is a ratio of the target resolution to the first resolution;
   performing (302), by the terminal (1000), feature extraction on the image with the first resolution to obtain a feature map comprising a texture feature;
   performing (303), by the terminal (1000), information fusion on the pixel position offset information and the feature map to obtain a target weight matrix; and
   obtaining (304), by the terminal (1000), an image with the target resolution based on the target weight matrix.

2. The method according to claim 1, wherein the performing (303), by the terminal (1000), information fusion on the pixel position offset information and the feature map to obtain a target weight matrix comprises:
   inputting, by the terminal (1000), the pixel position offset information and the feature map into a first neural network model to obtain the target weight matrix.

3. The method according to claim 2, wherein the first neural network model comprises a network model formed by combining a convolutional neural network and a fully-connected neural network.

4. The method according to claim 1, wherein the performing, by the terminal (1000), information fusion on the pixel position offset information and the feature map to obtain a target weight matrix comprises:

   obtaining, by the terminal (1000), an initial weight matrix based on the offset matrix and the magnification scale; and
   inputting, by the terminal (1000), the initial weight matrix and the feature map into a second neural network model to obtain the target weight matrix.

5. The method according to any one of claims 1 to 4, wherein the performing, by the terminal (1000), feature extraction on the image with the first resolution to obtain a feature map comprising a texture feature comprises:
   inputting, by the terminal (1000), the image with the first resolution into a third neural network model to output the feature map.

6. The method according to any one of claims 1 to 5, wherein the obtaining, by the terminal (1000), an image with the target resolution based on the target weight matrix comprises:
   performing, by the terminal (1000), upsampling on the feature map based on the target weight matrix to obtain the image with the target resolution.

7. An image super-resolution apparatus, comprising:

   an obtaining unit (901), configured to obtain pixel position offset information based on an image with a first resolution, and a target resolution, wherein the target resolution is greater than the first resolution, and wherein the pixel position offset information comprises an offset matrix and a magnification scale, the offset matrix indicates a sampling offset of each pixel in the image with the first resolution, and the magnification scale is a ratio of the target resolution to the first resolution, and

the obtaining unit (901) is further configured to perform feature extraction on the image with the first resolution to obtain a feature map comprising a texture feature; and

a processing unit (902), configured to perform information fusion on the pixel position offset information and the feature map to obtain a target weight matrix, wherein

the obtaining unit (901) is further configured to obtain an image with the target resolution based on the target weight matrix.

8. The apparatus according to claim 7, wherein the processing unit (902) is specifically configured to:
input the pixel position offset information and the feature map into a first neural network model to obtain the target weight matrix.

9. The apparatus according to claim 8, wherein the first neural network model comprises a network model formed by combining a convolutional neural network and a fully-connected neural network.

10. The apparatus according to claim 7, wherein the processing unit (902) is specifically configured to:

obtain an initial weight matrix based on the offset matrix and the magnification scale; and
input the initial weight matrix and the feature map into a second neural network model to obtain the target weight matrix.

11. The apparatus according to any one of claims 7 to 10, wherein the obtaining unit (901) is specifically configured to:
input the image with the first resolution into a third neural network model to output the feature map.

12. The apparatus according to any one of claims 7 to 11, wherein the obtaining unit (901) is specifically configured to:
perform upsampling on the feature map based on the target weight matrix to obtain the image with the target resolution.

13. A terminal (1000), comprising one or more processors (1001) and a memory (1002), wherein

the memory (1002) stores computer-readable instructions; and
the one or more processors (1001) read the computer-readable instructions, so that the terminal (1000) is configured to implement the method according to any one of claims 1 to 6.

14. A computer program product, comprising computer-readable instructions, wherein when the computer-readable instructions are run on a computer, the computer-readable instructions cause the computer to perform the method according to any one of claims 1 to 6.

15. A computer-readable storage medium, comprising computer-readable instructions, wherein when the computer-readable instructions are run on a computer, the computer-readable instructions cause the compute to perform the method according to any one of claims 1 to 6.

**Patentansprüche**

1. Bildhochauflösungsverfahren, umfassend:

Erlangen (301) von Informationen zum Pixelpositionsversatz durch ein Endgerät (1000) basierend auf einem Bild mit einer ersten Auflösung und einer Zielauflösung, wobei die Zielauflösung größer als die erste Auflösung ist, wobei die Informationen zum Pixelpositionsversatz eine Versatzmatrix und eine Vergrößerungsskala umfassen, die Versatzmatrix einen Abtastversatz jedes Pixels in dem Bild mit der ersten Auflösung angibt und die Vergrößerungsskala ein Verhältnis der Zielauflösung zu der ersten Auflösung ist;
Durchführen (302) einer Merkmalsextraktion an dem Bild mit der ersten Auflösung durch das Endgerät (1000), um eine Merkmalskarte zu erlangen, die ein Texturmerkmal umfasst;
Durchführen (303) einer Informationsfusion an den Informationen zum Pixelpositionsversatz und der Merkmalskarte durch das Endgerät (1000), um eine Zielgewichtsmatrix zu erlangen; und
Erlangen (304) eines Bildes mit der Zielauflösung basierend auf der Zielgewichtsmatrix durch das Endgerät (1000).

**2.** Verfahren nach Anspruch 1, wobei das Durchführen (303) einer Informationsfusion an den Informationen zum Pixelpositionsversatz und der Merkmalskarte durch das Endgerät (1000), um eine Zielgewichtsmatrix zu erlangen, Folgendes umfasst:
Eingeben der Informationen zum Pixelpositionsversatz und der Merkmalskarte durch das Endgerät (1000) in ein erstes neuronales Netzwerkmodell, um die Zielgewichtsmatrix zu erlangen.

**3.** Verfahren nach Anspruch 2, wobei das erste neuronale Netzwerkmodell ein Netzwerkmodell umfasst, das durch Kombinieren eines faltenden neuronalen Netzwerks und eines vollständig verbundenen neuronalen Netzwerks ausgebildet wird.

**4.** Verfahren nach Anspruch 1, wobei das Durchführen einer Informationsfusion an den Informationen zum Pixelpositionsversatz und der Merkmalskarte durch das Endgerät (1000), um eine Zielgewichtsmatrix zu erlangen, Folgendes umfasst:

Erlangen einer Anfangsgewichtsmatrix durch das Endgerät (1000) basierend auf der Versatzmatrix und der Vergrößerungsskala; und
Eingeben der Anfangsgewichtsmatrix und der Merkmalskarte durch das Endgerät (1000) in ein zweites neuronales Netzwerkmodell, um die Zielgewichtsmatrix zu erlangen.

**5.** Verfahren nach einem der Ansprüche 1 bis 4, wobei das Durchführen einer Merkmalsextraktion an dem Bild mit der ersten Auflösung durch das Endgerät (1000), um eine Merkmalskarte zu erlangen, die ein Texturmerkmal umfasst, Folgendes umfasst:
Eingeben des Bildes mit der ersten Auflösung durch das Endgerät (1000) in ein drittes neuronales Netzwerkmodell, um die Merkmalskarte auszugeben.

**6.** Verfahren nach einem der Ansprüche 1 bis 5, wobei das Erlangen eines Bildes mit der Zielauflösung basierend auf der Zielgewichtsmatrix durch das Endgerät (1000) Folgendes umfasst: Durchführen einer Abtastratenerhöhung durch das Endgerät (1000) an der Merkmalskarte basierend auf der Zielgewichtsmatrix, um das Bild mit der Zielauflösung zu erlangen.

**7.** Bildhochauflösungsvorrichtung, umfassend:

eine Erlangungseinheit (901), die dazu konfiguriert ist, Informationen zum Pixelpositionsversatz basierend auf einem Bild mit einer ersten Auflösung und einer Zielauflösung zu erlangen, wobei die Zielauflösung größer als die erste Auflösung ist und wobei die Informationen zum Pixelpositionsversatz eine Versatzmatrix und eine Vergrößerungsskala umfassen, die Versatzmatrix einen Abtastversatz jedes Pixels in dem Bild mit der ersten Auflösung angibt und die Vergrößerungsskala ein Verhältnis der Zielauflösung zu der ersten Auflösung ist, und die Erlangungseinheit (901) ferner dazu konfiguriert ist, eine Merkmalsextraktion an dem Bild mit der ersten Auflösung durchzuführen, um eine Merkmalskarte zu erlangen, die ein Texturmerkmal umfasst; und
eine Verarbeitungseinheit (902), die dazu konfiguriert ist, eine Informationsfusion an den Informationen zum Pixelpositionsversatz und der Merkmalskarte durchzuführen, um eine Zielgewichtsmatrix zu erlangen, wobei die Erlangungseinheit (901) ferner dazu konfiguriert ist, ein Bild mit der Zielauflösung basierend auf der Zielgewichtsmatrix zu erlangen.

**8.** Vorrichtung nach Anspruch 7, wobei die Verarbeitungseinheit (902) speziell dazu konfiguriert ist:
die Informationen zum Pixelpositionsversatz und die Merkmalskarte in ein erstes neuronales Netzwerkmodell einzugeben, um die Zielgewichtsmatrix zu erlangen.

**9.** Vorrichtung nach Anspruch 8, wobei das erste neuronale Netzwerkmodell ein Netzwerkmodell umfasst, das durch Kombinieren eines faltenden neuronalen Netzwerks und eines vollständig verbundenen neuronalen Netzwerks ausgebildet wird.

**10.** Vorrichtung nach Anspruch 7, wobei die Verarbeitungseinheit (902) speziell dazu konfiguriert ist:

eine Anfangsgewichtsmatrix basierend auf der Versatzmatrix und der Vergrößerungsskala zu erlangen; und
die Anfangsgewichtsmatrix und die Merkmalskarte in ein zweites neuronales Netzwerkmodell einzugeben, um die Zielgewichtsmatrix zu erlangen.

**11.** Vorrichtung nach einem der Ansprüche 7 bis 10, wobei die Erlangungseinheit (901) speziell dazu konfiguriert ist: das Bild mit der ersten Auflösung in ein drittes neuronales Netzwerkmodell einzugeben, um die Merkmalskarte auszugeben.

**12.** Vorrichtung nach einem der Ansprüche 7 bis 11, wobei die Erlangungseinheit (901) speziell dazu konfiguriert ist: eine Abtastratenerhöhung an der Merkmalskarte basierend auf der Zielgewichtsmatrix durchzuführen, um das Bild mit der Zielauflösung zu erlangen.

**13.** Endgerät (1000), umfassend einen oder mehrere Prozessoren (1001) und einen Speicher (1002), wobei der Speicher (1002) computerlesbare Anweisungen speichert; und der eine oder die mehreren Prozessoren (1001) die computerlesbaren Anweisungen lesen, sodass das Endgerät (1000) dazu konfiguriert ist, das Verfahren nach einem der Ansprüche 1 bis 6 zu implementieren.

**14.** Computerprogrammprodukt, umfassend computerlesbare Anweisungen, wobei die computerlesbaren Anweisungen bei Ausführung der computerlesbaren Anweisungen auf einem Computer bewirken, dass der Computer das Verfahren nach einem der Ansprüche 1 bis 6 durchführt.

**15.** Computerlesbares Speichermedium, umfassend computerlesbare Anweisungen, wobei die computerlesbaren Anweisungen bei Ausführung der computerlesbaren Anweisungen auf einem Computer bewirken, dass der Computer das Verfahren nach einem der Ansprüche 1 bis 6 durchführt.

**Revendications**

**1.** Procédé de super-résolution d'image, comprenant :

l'obtention (301), par un terminal (1000), d'informations de décalage de position de pixel sur la base d'une image avec une première résolution, et une résolution cible, dans lequel la résolution cible est supérieure à la première résolution, dans lequel les informations de décalage de position de pixel comprennent une matrice de décalage et une échelle de grossissement, la matrice de décalage indique un décalage d'échantillonnage de chaque pixel dans l'image avec la première résolution, et l'échelle de grossissement est un rapport de la résolution cible à la première résolution ;
la réalisation (302), par le terminal (1000), d'une extraction de caractéristiques sur l'image avec la première résolution pour obtenir une carte de caractéristiques comprenant une caractéristique de texture ;
la réalisation (303), par le terminal (1000), d'une fusion d'informations sur les informations de décalage de position de pixel et la carte de caractéristiques pour obtenir une matrice de pondération cible ; et
l'obtention (304), par le terminal (1000), d'une image avec la résolution cible sur la base de la matrice de pondération cible.

**2.** Procédé selon la revendication 1, dans lequel la réalisation (303), par le terminal (1000), d'une fusion d'informations sur les informations de décalage de position de pixel et de la carte de caractéristiques pour obtenir une matrice de pondération cible comprend :
l'entrée, par le terminal (1000), des informations de décalage de position de pixel et de la carte de caractéristiques dans un premier modèle de réseau neuronal pour obtenir la matrice de pondération cible.

**3.** Procédé selon la revendication 2, dans lequel le premier modèle de réseau neuronal comprend un modèle de réseau formé en combinant un réseau neuronal convolutif et un réseau neuronal entièrement connecté.

**4.** Procédé selon la revendication 1, dans lequel la réalisation, par le terminal (1000), d'une fusion d'informations sur les informations de décalage de position de pixel et de la carte de caractéristiques pour obtenir une matrice de pondération cible comprend :

l'obtention, par le terminal (1000), d'une matrice de pondération initiale sur la base de la matrice de décalage et de l'échelle de grossissement ; et
l'entrée, par le terminal (1000), de la matrice de pondération initiale et de la carte de caractéristiques dans un deuxième modèle de réseau neuronal pour obtenir la matrice de pondération cible.

**5.** Procédé selon l'une quelconque des revendications 1 à 4, dans lequel la réalisation, par le terminal (1000), d'une extraction de caractéristiques sur l'image avec la première résolution pour obtenir une carte de caractéristiques comprenant une caractéristique de texture comprend :
l'entrée, par le terminal (1000), de l'image avec la première résolution dans un troisième modèle de réseau neuronal pour produire la carte de caractéristiques.

6. Procédé selon l'une quelconque des revendications 1 à 5, dans lequel l'obtention, par le terminal (1000), d'une image avec la résolution cible sur la base de la matrice de pondération cible comprend :
la réalisation, par le terminal (1000), d'un suréchantillonnage sur la carte de caractéristiques sur la base de la matrice de pondération cible pour obtenir l'image avec la résolution cible.

7. Appareil de super-résolution d'image, comprenant :

une unité d'obtention (901), configurée pour obtenir des informations de décalage de position de pixel sur la base d'une image avec une première résolution, et une résolution cible, dans lequel la résolution cible est supérieure à la première résolution, et dans lequel les informations de décalage de position de pixel comprennent une matrice de décalage et une échelle de grossissement, la matrice de décalage indique un décalage d'échantillonnage de chaque pixel dans l'image avec la première résolution, et l'échelle de grossissement est un rapport de la résolution cible à la première résolution, et
l'unité d'obtention (901) est également configurée pour réaliser une extraction de caractéristiques sur l'image avec la première résolution pour obtenir une carte de caractéristiques comprenant une caractéristique de texture ; et
une unité de traitement (902), configurée pour réaliser une fusion d'informations sur les informations de décalage de position de pixel et la carte de caractéristiques pour obtenir une matrice de pondération cible, dans lequel l'unité d'obtention (901) est également configurée pour obtenir une image avec la résolution cible sur la base de la matrice de pondération cible.

8. Appareil selon la revendication 7, dans lequel l'unité de traitement (902) est spécifiquement configurée pour :
entrer des informations de décalage de position de pixel et la carte de caractéristiques dans un premier modèle de réseau neuronal pour obtenir la matrice de pondération cible.

9. Appareil selon la revendication 8, dans lequel le premier modèle de réseau neuronal comprend un modèle de réseau formé en combinant un réseau neuronal convolutif et un réseau neuronal entièrement connecté.

10. Appareil selon la revendication 7, dans lequel l'unité de traitement (902) est spécifiquement configurée pour :

obtenir une matrice de pondération initiale sur la base de la matrice de décalage et de l'échelle de grossissement ; et
entrer la matrice de pondération initiale et la carte de caractéristiques dans un deuxième modèle de réseau neuronal pour obtenir la matrice de pondération cible.

11. Appareil selon l'une quelconque des revendications 7 à 10, dans lequel l'unité d'obtention (901) est spécifiquement configurée pour :
entrer l'image avec la première résolution dans un troisième modèle de réseau neuronal pour produire la carte de caractéristiques.

12. Appareil selon l'une quelconque des revendications 7 à 11, dans lequel l'unité d'obtention (901) est spécifiquement configurée pour :
réaliser un suréchantillonnage sur la carte de caractéristiques sur la base de la matrice de pondération cible pour obtenir l'image avec la résolution cible.

13. Terminal (1000), comprenant un ou plusieurs processeurs (1001) et une mémoire (1002), dans lequel

la mémoire (1002) stocke des instructions lisibles par ordinateur ; et
les un ou plusieurs processeurs (1001) lisent les instructions lisibles par ordinateur, de sorte que le terminal (1000) est configuré pour mettre en œuvre le procédé selon l'une quelconque des revendications 1 à 6.

14. Produit de programme informatique, comprenant des instructions lisibles par ordinateur, dans lequel lorsque les instructions lisibles par ordinateur sont exécutées sur un ordinateur, les instructions lisibles par ordinateur amènent l'ordinateur à réaliser le procédé selon l'une quelconque des revendications 1 à 6.

15. Support de stockage lisible par ordinateur, comprenant des instructions lisibles par ordinateur, dans lequel lorsque les instructions lisibles par ordinateur sont exécutées sur un ordinateur, les instructions lisibles par ordinateur amènent l'ordinateur à réaliser le procédé selon l'une quelconque des revendications 1 à 6.

Three-times
super-
resolution

Stretching
(interpolation)

180p → 540p

Landscape
mode 1080p

Portrait mode
720p

After super-resolution of an integer multiple is
performed on a low-resolution image, interpolation
processing further needs to be performed on a
processed image to stretch the image to a screen size

FIG. 1

Terminal device

Application — Image → Rendering
pipeline

Super-
resolution
module

Display module

FIG. 2

A terminal obtains pixel position offset information based on an image with a first resolution, and a target resolution  ⌐ 301

The terminal performs feature extraction on the image with the first resolution to obtain a feature map including a texture feature  ⌐ 302

The terminal performs information fusion based on the pixel position offset information and the feature map to obtain a target weight matrix  ⌐ 303

The terminal obtains an image with the target resolution based on the target weight matrix  ⌐ 304

FIG. 3

Low-resolution image

Convolutional neural network

Feature map

FIG. 4a

Texture feature

Pixel position offset
information

```
Feature maps          Offset matrix    Magnification
                                          scale
```

SASR module

Feature transform → Position information transform

Feature maps → Weights

Information fusion ← Weight maps

Weight matrix

FIG. 4b

```
Screen/window        Application        Texture feature      502
                                        extraction module

Target resolution    Image with a first  Feature extraction
                     resolution          network

Pixel position                           Feature map
offset information   Offset matrix and
extraction module    magnification scale

501

                     Information fusion network
         SASR
503      module                                    Upsampling
                     Target weight matrix           module

                                                    504
```

FIG. 5

FIG. 6

FIG. 7

FIG. 8a

*(landscape|person|building|...)*

HR dataset                    LR dataset

FIG. 8b

Build a model

Perform model connection to form a trainable super-resolution network

Optimize the model by using an Adam optimizer

FIG. 8c

8001

Low-resolution image

Texture feature extraction module

Offset generation module

8002

Feature map

Offset matrix

SASR module

8006

Optimizer

Target weight matrix

8005

Loss

Upsampling module

8003

High-resolution image

Super-resolution image

8004

FIG. 8d

FIG. 8e

FIG. 9

1000

Terminal

1001 — Processor

1002 — Memory

1003 — Wired or wireless network interface

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019192588 A1

**Non-patent literature cited in the description**

- **JINGYU YANG et al.** *implicit Transformer Network for Screen Content Image Continuous Super-Resolution*